# EUROPÄISCHE PATENTSCHRIFT

(11) **EP 3 173 217 B1**
(45) Veröffentlichungstag und Bekanntmachung des Hinweises auf die Patenterteilung: **24.08.2022**
(21) Anmeldenummer: 15196004.4
(22) Anmeldetag: 24.11.2015
(51) Int. Cl.: B29C 70/38, G05D 1/00, B29C 53/80

(54) **VORRICHTUNG UND VERFAHREN ZUM HERSTELLEN EINES FASERVERBUNDBAUTEILS**
DEVICE AND METHOD FOR MANUFACTURING A FIBRE COMPOUND COMPONENT
DISPOSITIF ET PROCÉDÉ DE FABRICATION D'UN COMPOSANT EN FIBRES COMPOSITES

(43) Veröffentlichungstag der Anmeldung: 31.05.2017
(73) Patentinhaber: Airbus Defence and Space GmbH, 85521 Ottobrunn (DE)
(72) Erfinder: Engel, Franz, 81539 München (DE); Weimer, Christian, 81539 München (DE); Orth, Tilman, 80469 München (DE)
(74) Vertreter: Isarpatent

(56) Entgegenhaltungen:
- US-A- 4 588 466
- US-A1- 2008 256 757
- US-A1- 2010 193 103
- US-A1- 2015 224 941
- US-B1- 8 788 130

## Beschreibung

Die vorliegende Erfindung betrifft eine Vorrichtung und ein Verfahren zum Herstellen eines Faserverbundbauteils.

Obwohl auf beliebige Faserverbundwerkstoffe und beliebige Bauteile anwendbar, werden die vorliegende Erfindung sowie die ihr zugrunde liegende Problematik in Bezug auf Carbon-Faser verstärkte Kunststoffe (CFK) und große Bauteile, beispielsweise Rumpfteile eines Luft- oder Raumfahrzeugs, näher erläutert.

Bisweilen werden große CFK-Bauteile zumeist mit der sogenannten Automated Fiber Placement (AFP) Technologie gefertigt. Dazu ist eine sehr groß dimensionierte Systemtechnik notwendig. Es handelt sich meist um einen an einem Portal aufgehängt laufenden Ablegeroboter, einem sogenannten Fiberplacement-Kopf oder Tapelege-Kopf, der Fasern auf einem formgebenden Werkzeug, beispielsweise der Negativform eines Rumpfabschnitts eines Luft- oder Raumfahrzeugs, ablegt.

Ein von derartigen Anlagen abweichender Ansatz einer Faser-Legevorrichtung ist in der DE 20 2011 110 519 U1 beschrieben. Dabei ist ein Schienensystem mit einer Vielzahl von Schienen und mehrere Ablegerobotern vorgesehen, welche auf dem Schienensystem entlang der Schienen bewegbar sind. Die Ablegeroboter und das Schienensystem werden mittels eines zentralen Leitrechners gesteuert.

Ferner beschreibt die US 2008/256757 A1 eine Vorrichtung zum Herstellen von nichtgewebtem Vlies aus einzelnen Fasern, wobei die Fasern zwischen zwei Rollen geführt werden. Durch ein sich bewegendes Förderband werden die Rollen rotierend bewegt, wobei durch den Abstand der beiden Rollen die Dicke des Vlieses bestimmt wird. In der US 8 788 130 B1 ist eine Rollenvorrichtung beschrieben, die zum Anhaften und Rollen über eine eisenhaltige Oberfläche ausgebildet ist. US 4 588 466 A offenbart eine Vorrichtung mit einer Ablegeeinheit und mit einem Werkzeug, das als Lauffläche ausgebildet ist.

Es ist Aufgabe der vorliegenden Erfindung eine verbesserte Ablegeeinheit, sowie eine verbesserte Vorrichtung und ein verbessertes Verfahren zum Herstellen eines Faserverbundbauteils bereitzustellen.

Erfindungsgemäß wird diese Aufgabe durch eine Vorrichtung mit den Merkmalen des Patentanspruchs 1 und/oder durch ein Verfahren mit den Merkmalen des Patentanspruchs 11 gelöst.

Die der vorliegenden Erfindung zugrunde liegende Idee besteht darin, eine Ablegeeinheit zum Ablegen von Fasermaterial mittels einem auf Magnetismus basierenden Antrieb auf einer Lauffläche fortzubewegen. Dazu ist eine Antriebseinrichtung der Ablegeeinheit und/oder die Lauffläche magnetisch derart aktivierbar, dass ein zur Fortbewegung der Ablegeeinheit wirkendes Magnetfeld bereitgestellt wird. Das Magnetfeld kann auf unterschiedliche Weise eine Fortbewegung bewirken. Zu einem Bewirken der Fortbewegung kann die Ablegeeinheit oder eine Antriebseinrichtung der Ablegeeinheit magnetisch angezogen oder abgestoßen werden. Ferner kann alternativ oder zusätzlich zu einem Bewirken der Fortbewegung ein innerhalb oder außerhalb an der Ablegeeinheit bzw. an einem Gehäuse derselben bewegliches Masseelement der Antriebseinrichtung derart verlagert und/oder ausgelenkt werden, dass durch die Verlagerung und/oder Auslenkung des Masseelements eine Fortbewegung der Ablegeeinheit eingeleitet oder hervorgerufen wird. Beispielsweise kann so ein Abrollen oder Verkippen der Ablegeeinheit bzw. deren Gehäuse hervorgerufen werden.

Vorzugsweise weist die Ablegeeinheit eine Steuereinrichtung zur Ansteuerung der Antriebseinrichtung auf.

In den Unteransprüchen finden sich vorteilhafte Ausgestaltungen und Verbesserungen der Erfindung.

Gemäß der Erfindung weist die Antriebseinrichtung steuerbare Magnete auf. Diese sind ausgebildet, die Ablegeeinheit bei Zusammenwirken mit der ferromagnetischen Lauffläche an der Lauffläche zu halten und/oder zu einer vorbestimmten Fortbewegung anzutreiben. Vorteilhaft ist die Antriebseinrichtung somit in der Lage, sich selbsttätig an der ferromagnetischen Lauffläche fortzubewegen. Des Weiteren kann aufgrund der magnetischen Anziehung mit der erfindungsgemäßen Ablegeeinheit vorteilhaft Fasermaterial auch mit einer senkrechten oder über Kopf verlaufenden Lauffläche abgelegt werden.

Die ferromagnetische Lauffläche kann zusätzlich mit den steuerbaren Magneten der Antriebseinrichtung zusammenwirkende steuerbare Magnete oder Permanentmagnete aufweisen.

Die steuerbaren Magnete der Antriebseinrichtung können auf verschiedene Weise vorgesehen bzw. realisiert sein. Bei einer Ausführung ist die Antriebseinrichtung als ein in die Ablegeeinheit, insbesondere innerhalb eines Gehäuses der Ablegeeinheit, integriert vorgesehenes Pendel ausgebildet. Das Pendel bewegt sich magnetisch angetrieben vorzugsweise mit einem minimalen Abstand entlang einer Innenfläche oder Mantelfläche des Gehäuses der Ablegeeinheit. Dabei wird die Ablegeeinheit bzw. deren Gehäuse dem Pendel nachfolgend gerollt bzw. gekippt.

Alternativ oder zusätzlich zu einem Pendel können auch an einem innerhalb der Ablegeeinheit, insbesondere an der Innenseite deren Gehäuse, vorgesehenen Führungssystem bewegliche steuerbare Magnete vorgesehen sein. Als Führungssystem kommen beispielsweise Schienen oder Nuten infrage.

Gemäß einer weiteren Ausführungsform kann eine Außenhaut des Gehäuses oder eine nahe an einer Außenhaut vorgesehene Schicht der Ablegeeinheit magnetisierbar ausgebildet sein. Insbesondere können ansteuerbare Elektromagnete in die Außenhaut der Ablegeeinheit integriert vorgesehen sein. Zur Fortbewegung der Ablegeeinheit wird das Magnetfeld durch eine entsprechende Ansteuerung in der gewünschten Fahrtrichtung entlang der magnetisierbaren Außenhaut oder Schicht verschoben.

Zusätzlich zu einem steuerbaren Magnetfeld kann auch ein ständig wirkendes oder statisches Magnetfeld zwischen der Ablegeeinheit und der Lauffläche vorgesehen sein. Damit kann die Ablegeeinheit unabhängig von einer Fortbewegung an der Lauffläche gehalten werden, beispielsweise auch zum Ablegen von Fasermaterial über Kopf. Ferner kann damit auch eine mittels der Ablegeeinheit auf das Fasermaterial aufgebrachte Kompaktierkraft auf einen vorbestimmten Wert eingestellt werden. Das ständig wirkende oder statische Magnetfeld kann mittels steuerbarer und/oder mittels permanenter Magnete vorgesehen sein.

Gemäß der Erfindung weist die Antriebseinrichtung ein ferromagnetisches Masseelement auf. Dieses ist ausgebildet, die Ablegeeinheit bei Zusammenwirken mit der ein Magnetfeld bereitstellenden Lauffläche an der Lauffläche zu halten und/oder zu einer vorbestimmten Fortbewegung anzutreiben. Vorteilhaft braucht bei dieser Ausführungsform keine aufwendige Anordnung steuerbarer Magnete in die Ablegeeinheit integriert werden. Das ferromagnetische Masseelement kann innerhalb eines Gehäuses der Ablegeeinheit beweglich vorgesehen sein.

Bei sämtlichen Ausführungen der Antriebseinrichtung ist eine Unterstützung des magnetischen Antriebs durch einen zusätzlichen andersartigen Antrieb, beispielsweise mittels eines oder mehrerer Elektromotoren, Pneumatikmotoren oder Hydraulikmotoren, denkbar. Ferner ist zusätzlich ein Antrieb mittels Druckluft, beispielsweise durch Abstoßung bzw. als Impulsantrieb, denkbar.

Gemäß einer vorteilhaften Ausführungsform der Ablegeeinheit ist ein Aufnahmeabschnitt vorgesehen, welcher mit einem Gehäuse gebildet ist. Insbesondere kann der Aufnahmeabschnitt zum Vorhalten eines Vorrats an Fasermaterial, vorzugsweise in Form einer Faserspule, ausgebildet sein. Somit kann die Ablegeeinheit vorteilhaft das Fasermaterial zur Ablage an einem vorbestimmten Ort mittransportieren, welches daher nicht von außen zugeführt werden braucht. Gemäß einer weiteren Ausführung wird das Fasermaterial von außen über eine Zuführeinrichtung zugeführt, wobei die Ablegeeinheit das Fasermaterial an dem vorbestimmten Ort ablegt. Auch bei dieser Ausführung ist ein Gehäuse zur Bildung eines Aufnahmeabschnitts für die Aufnahme der weiteren Komponenten der Ablegeeinheit vorgesehen. Bei dem Gehäuse kann es sich um jegliche Art einer mechanischen Hausung handeln. Das Gehäuse kann geschlossen oder an einer oder mehreren Seite offen ausgebildet sein. Insbesondere kann im Fall eines zylinderförmigen Gehäuses eine Mantelfläche teilweise oder ganz ausgespart sein. Auch eine allseitig offene rahmenartige Ausbildung des Gehäuses ist möglich. Ferner kann das Gehäuse in mehrere Gehäuseabschnitte geteilt ausgebildet sein. Insbesondere kann es sich um zwei stirnseitige Endabschnitte des Gehäuses handeln, wobei insbesondere die Faserspule oder mehrere Faserspulen dazwischen angeordnet sein können. Auch Zwischenabschnitte des Gehäuses, insbesondere zwischen den Faserspulen, können vorgesehen sein.

Bei einer Ausführung ist eine Halterungseinrichtung vorgesehen, welche die Komponenten der Ablegeeinheit innerhalb des Gehäuses haltert bzw. lagert. Die Halterungseinrichtung selbst kann fest oder beweglich innerhalb des Gehäuses gelagert vorgesehen sein. Bei einer beweglichen Halterungseinrichtung wird die Lage der Komponenten derart korrigiert, dass diese stets in eine gewünschte Richtung angepasst an die Fortbewegung der Ablegeeinheit ausgerichtet sind. Beispielsweise kann dazu innerhalb des Gehäuses mit einem geringfügig geringeren Durchmesser ein Innengehäuse vorgesehen sein, welches relativ zu dem Gehäuse rotierbar ist. Dazu kann das Innengehäuse über mechanische oder magnetische Lager mit dem Gehäuse gekoppelt sein. Eine solche Ausführung kommt insbesondere bei einem kugelförmigen oder zylinderförmigen Gehäuse infrage.

Gemäß einer Weiterbildung ist die Antriebseinrichtung an oder in dem Gehäuse vorgesehen. Das Gehäuse ist dabei zur Fortbewegung der Ablegeeinheit auf der Lauffläche abrollbar ausgebildet. Das Gehäuse erfüllt somit gleichzeitig mehrere Funktionen der Aufnahme des Fasermaterials und des Bereitstellens einer Abrollfläche, welche zur Fortbewegung der Ablegeeinheit auf der Lauffläche abrollbar ist. Gemäß einer weiteren Ausführungsform weist die Antriebseinrichtung relativ zu dem Gehäuse bewegliche Magnete und/oder ferromagnetische Masseelemente auf. Insbesondere sind diese umfänglich an dem Gehäuse beweglich vorgesehen. Vorteilhaft kann die Antriebseinrichtung daher auch während der Fortbewegung der Ablegeeinheit stets in nächster Nähe zu der Lauffläche, insbesondere direkt an der Lauffläche, angeordnet sein.

Gemäß einer weiteren Ausführungsform ist die Antriebseinrichtung als mit dem Gehäuse gekoppelte Antriebsrolle ausgebildet. Vorteilhaft stellt dies eine vergleichsweise einfach herzustellende Antriebseinrichtung dar, welche nicht in das Gehäuse integriert, sondern lediglich daran gekoppelt vorgesehen ist. Darüber hinaus kann eine derartige Antriebsrolle auch eine zusätzliche Stabilität der Ablegeeinheit im Stand oder bei einer Fortbewegung bereitstellen.

Gemäß einer Weiterbildung ist die Antriebseinrichtung als Ablegeeinrichtung zum definierten Ablegen und/oder Kompaktieren eines Fasermaterials auf einem Werkzeug ausgebildet. Insbesondere kann dies bei einer als Antriebsrolle ausgebildeten Antriebseinrichtung vorgesehen sein. Vorteilhaft übernimmt die Antriebsrolle somit zusätzlich zur Funktion der Kraftübertragung auf die Lauffläche auch die Funktion des definierten Ablegens und/oder Kompaktierens des Fasermaterials. Die Ablegeeinheit kann somit vorteilhaft auch eingesetzt werden, um bereits abgelegtes Fasermaterial zu kompaktieren. Die mittels der Ablegeeinrichtung zum definierten Ablegen und/oder Kompaktieren aufbringbaren Kräfte können über die Stärke des zum Fortbewegen und/oder Halten der Ablegeeinheit auf der Lauffläche vorgesehene Magnetfeld reguliert bzw. eingestellt werden.

Gemäß einer weiteren Ausführungsform ist die Antriebseinrichtung als Heizeinrichtung zum Aktivieren eines Harzes oder Binders des abgelegten Fasermaterials vorgesehen. Hier besteht ein besonderer Synergieeffekt mit dem magnetischen Antrieb, denn dieser erzeugt bei Fortbewegung Wirbelströme, welche die Heizeinrichtung und/oder die Lauffläche lokal aufgrund derer elektrischen Widerstände aufheizen. Die Heizeinrichtung kann insbesondere als eine sich aufheizende Antriebsrolle und/oder als eine die Lauffläche aufheizende Antriebsrolle ausgebildet sein. Ferner ist eine kombinierte Ausbildung der Antriebseinrichtung, insbesondere in Form einer Antriebsrolle, als Ablegeeinrichtung zum definierten Ablegen und/oder Kompaktieren und als Heizeinrichtung zum Aktivieren eines Harzes oder Binders möglich. Vorteilhaft ist so eine Funktionsintegration in einer Komponente geschaffen.

Gemäß der erfindungsgemäßen Vorrichtung zum Herstellen eines Faserverbundbauteils ist das formgebende Werkzeug als Lauffläche ausgebildet. Insbesondere handelt es sich um eine ferromagnetische Lauffläche. Die Lauffläche, d.h. das Werkzeug, ist dabei derart ausgebildet, dass die Ablegeeinheit durch magnetisches Zusammenwirken der Antriebseinrichtung mit der Lauffläche auf der Lauffläche fortbewegbar ist. Vorteilhaft kann sich die Ablegeeinheit somit magnetisch angetrieben direkt auf dem Werkzeug fortbewegen.

Gemäß einer weiteren Ausführungsform der Vorrichtung zum Herstellen eines Faserverbundbauteils ist ein Hohlkörper vorgesehen, dessen Innenseite als eine Lauffläche für die Ablegeeinheit ausgebildet ist. Auf dieser ist die Ablegeeinheit durch magnetisches Zusammenwirken mit der Lauffläche fortbewegbar. Das formgebende Werkzeug ist dabei innerhalb des Hohlkörpers derart anordenbar, dass die sich auf der Lauffläche fortbewegende Ablegeeinheit das Werkzeug mit dem Fasermaterial umwickelt oder umflicht. Mittels Umwickeln oder Umflechten eines formgebenden Werkzeugs können vorteilhaft komplexe Geometrien abgebildet werden. Das formgebende Werkzeug kann in diesem Fall auch als Kern, gegebenenfalls auch als verlorener Kern, ausgebildet sein. Ferner können andere komplexe Geometrien mit hoher Flexibilität, beispielsweise mit unterschiedlichsten Wickel- oder Flechtmustern oder auch mit unterschiedlich geformten und/oder unterschiedlich großen formgebenden Werkzeugen und Hohlkörpern, dargestellt werden.

Gemäß einer Ausführungsform enthält die Lauffläche steuerbare Magnete, welche zum Zusammenwirken mit der Antriebseinrichtung zur magnetisch angetriebenen Fortbewegung der Ablegeeinheit auf der Lauffläche ansteuerbar ausgebildet sind. Die Ablegeeinheiten weisen jeweils eine mit den steuerbaren Magneten der Lauffläche zusammenwirkende Antriebseinrichtung zur magnetisch angetriebenen Fortbewegung auf der Lauffläche auf. Die Magnete werden zur Fortbewegung der einzelnen Ablegeeinheiten auf der Lauffläche mittels einer Steuereinheit angesteuert. Vorzugsweise erfolgt dies mittels den jeder Ablegeeinheit eigenen Steuereinheiten.

Gemäß einer Ausführungsform weist die Lauffläche Kommunikationsmittel auf, welche ausgelegt sind, Steuerbefehle einer Steuereinrichtung zum Ansteuern der steuerbaren Magnete für die Fortbewegung der Ablegeeinheit zu übermitteln. Insbesondere sind die Kommunikationsmittel ausgelegt, Steuerbefehle der in die Ablegeeinheiten integrierten Steuereinrichtungen zum Ansteuern der steuerbaren Magnete für die Fortbewegung der Ablegeeinheit zu übermitteln. Vorteilhaft kann sich die Ablegeeinheit somit autonom magnetisch angetrieben auf der Lauffläche fortbewegen, ohne selbst notwendigerweise steuerbare Magnete zu enthalten.

Die obigen Ausgestaltungen und Weiterbildungen lassen sich, sofern sinnvoll, beliebig miteinander kombinieren, ohne von dem in den beigefügten Ansprüchen definierten Umfang abzuweichen. Ferner sind sämtliche Merkmale der Ablegeeinheit und der Vorrichtung zum Herstellen eines Faserverbundbauteils auf das Verfahren zum Herstellen eines Faserverbundbauteils übertragbar. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung. Insbesondere wird dabei der Fachmann auch Einzelaspekte als Verbesserungen oder Ergänzungen zu der jeweiligen Grundform der vorliegenden Erfindung hinzufügen.

Die Erfindung wird im Folgenden anhand von Ausführungsbeispielen unter Bezugnahme auf die beiliegenden Figuren der Zeichnung näher erläutert. Die Elemente der Zeichnungen sind nicht notwendigerweise maßstabsgetreu zueinander gezeigt. Von den Figuren zeigen:
- Fig. 1: eine schematisch dargestellte Draufsicht auf eine Vorrichtung zur Herstellung eines Faserverbundbauteils;
- Fig. 2A: eine schematisch dargestellte Vorderansicht einer Vorrichtung zur Herstellung eines Faserverbundbauteils gemäß einer weiteren Ausführungsform;
- Fig. 2B: eine schematisch dargestellte Seitenansicht einer Vorrichtung zur Herstellung eines Faserverbundbauteils gemäß einer weiteren Ausführungsform;
- Fig. 3A, 3B: Die Vorrichtung zur Herstellung eines Faserverbundbauteils mit einer ersten Abwandlung;
- Fig. 4A, 4B: Die Vorrichtung gemäß Fig. 3A, 3B mit einer weiteren Abwandlung;
- Fig. 5: eine schematische Schnittansicht einer Ausführungsform einer Vorrichtung zur Herstellung eines Faserverbundbauteils;
- Fig. 6: eine schematische Schnittansicht einer weiteren Ausführungsform einer Vorrichtung zur Herstellung eines Faserverbundbauteils;
- Fig. 7A: eine schematische Längsschnittansicht einer kugelförmigen Ablegeeinheit;
- Fig. 7B: eine schematische Querschnittsansicht der Ablegeeinheit gemäß Fig. 7A;
- Fig. 8A, 8B: eine Ablegeeinheit gemäß einer weiteren Ausführungsform;
- Fig. 9A, 9B: eine Ablegeeinheit gemäß einer noch weiteren Ausführungsform;
- Fig. 10A, 10B: eine Ablegeeinheit gemäß einer weiteren Ausführungsform;
- Fig. 11A: eine schematische Längsschnittansicht einer zylinderförmigen Ablegeeinheit;
- Fig. 11B: eine schematische Querschnittansicht der Ablegeeinheit gemäß Fig. 11A;
- Fig. 12A, 12B: eine Ablegeeinheit gemäß einer weiteren Ausführungsform;
- Fig. 13A, 13B: eine Ablegeeinheit mit Antriebsrolle;
- Fig. 14A, 14B: eine Ablegeeinheit mit beweglichen Faserspulen;
- Fig. 15A, 15B: eine Ablegeeinheit mit Ablegeeinrichtung;
- Fig. 16A, 16B: eine Ablegeeinheit gemäß einer weiteren Ausführungsform;
- Fig. 17A, 17B: eine Ablegeeinheit gemäß einer noch weiteren Ausführungsform; und
- Fig. 18A, 18B: eine Ablegeeinheit mit externer Zuführeinrichtung für Fasermaterial;

In den Figuren bezeichnen dieselben Bezugszeichen gleiche oder funktionsgleiche Komponenten, soweit nichts Gegenteiliges angegeben ist.

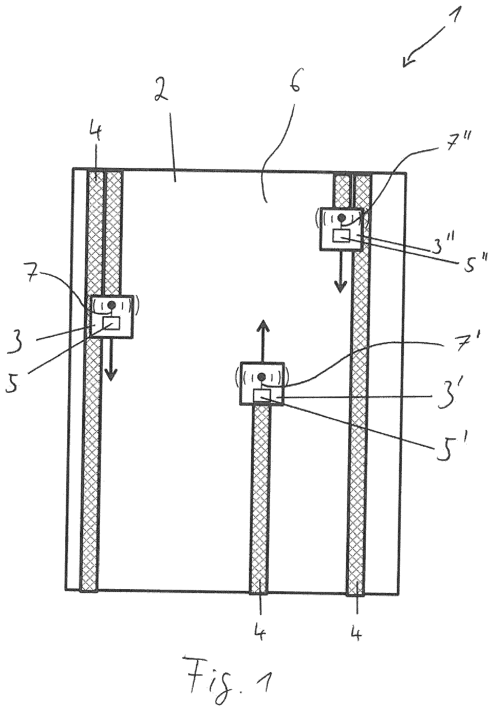

Fig. 1 zeigt eine schematisch dargestellte Draufsicht auf eine Vorrichtung 1 zur Herstellung eines Faserverbundbauteils.

Die Vorrichtung 1 weist ein formgebendes Werkzeug 2 sowie eine Mehrzahl von Ablegeeinheiten 3, 3', 3" auf. Das Werkzeug 2 ist als eine Lauffläche 6 für die Ablegeeinheiten 3, 3', 3" ausgebildet.

Die Ablegeeinheiten 3, 3', 3" sind jeweils zum Ablegen eines Fasermaterials 4 auf dem formgebenden Werkzeug 2 ausgebildet. Sie weisen jeweils eine Steuereinrichtung 5, 5', 5" auf, welche ausgelegt ist, die jeweilige Ablegeeinheit 3; 3'; 3" zum automatischen Zusammenwirken mit den weiteren Ablegeeinheiten 3, 3', 3" zu einem gemeinsamen Ablegen einer vorbestimmten Faseranordnung anzusteuern.

Dargestellt sind die Ablegeeinheiten 3, 3', 3" während des Ablegens des Fasermaterials 4, wobei rein beispielhaft eine Anzahl von drei Ablegeeinheiten 3, 3', 3" dargestellt ist. Es kann sich anstatt dreier um eine beliebige andere Mehrzahl von Ablegeeinheiten 3, 3', (...), 3ⁿ handeln.

Die Ablegeeinheiten 3, 3', 3" sind jeweils zur autonomen Fortbewegung auf der Lauffläche 6 ausgebildet. Sie weisen dementsprechende nicht im einzelnen dargestellte Sensoren und eine Antriebseinrichtung auf, welche mit der Steuereinrichtung 5, 5', 5" zur autonomen Fortbewegung zusammenwirken. Die Sensoren erfassen bereits mit Fasermaterial 4 belegte Bereiche, Randbereiche des Werkzeugs 2 sowie weitere Ablegeeinheiten. Ferner weisen die Ablegeeinheiten 3, 3', 3" jeweils Kommunikationsmittel 7, 7', 7" auf, welche zur Kommunikation der Ablegeeinheiten 3, 3', 3" untereinander vorgesehen sind. Somit kann eine Abstimmung des Musters oder der Aufteilung der Faseranordnung zum Ablegen derselben unter den Ablegeeinheiten 3, 3', 3" flexibel erfolgen.

Eine Ablegeeinheit wird stets derart durch die Steuereinrichtung 5, 5'; 5" angesteuert, dass ein nächstliegender Abschnitt des Werkzeugs 2, welcher mit einer Faserlage des Fasermaterials 4 zu belegen ist, in einer geometrisch einfach zu erfassen Weise, insbesondere einer geraden Linie, belegt wird.

Durch die Kommunikationsmittel 7, 7', 7" werden Informationen über bereits belegte Abschnitte unter den Ablegeeinheiten geteilt. Somit kreuzen sich die Fortbewegungsbahnen der Ablegeeinheiten nur, falls dies für das abzulegende Muster der Faseranordnung gewünscht ist oder falls sich eine Ablageeinheit zu einem neuen Startpunkt bewegt.

Bei Erreichen eines Randes oder einer Begrenzung des Werkzeugs 2 oder eines bereits mit Fasermaterial 4 in der gewünschten Weise belegten Abschnitts ändert die Ablegeeinheit 3; 3'; 3" von der Steuereinrichtung angesteuert ihre Fortbewegungsrichtung. Beispielsweise dreht die Ablageeinheit mit einem Versatz einer Breite einer Faserlage bzw. einer Legebahn des Fasermaterials 4 um und legt bei einer Fortbewegung in entgegengesetzter Richtung an die zuvor gelegte Legebahn angrenzend eine weitere Faserlage ab. Sind angrenzend keine freien Abschnitte des Werkzeugs vorhanden, bewegt sich die Ablegeeinheit zu einem neuen Startpunkt, welcher noch nicht mit einer gewünschten Faserlage belegt ist. Der Startpunkt wird vorzugsweise anhand der von den anderen Ablegeeinheiten übermittelten Informationen an einer Stelle des Werkezeugs gewählt, an welcher noch keine Ablage in gewünschter Weise erfolgt ist.

Dieses Vorgehen wird, insbesondere in autonomer Weise, solange weitergeführt, bis keine freien Abschnitte des Werkzeugs 2 mehr vorhanden sind, an welchen die vorbestimmte Faseranordnung eine Ablage vorsieht. Somit wird das komplette formgebende Werkzeug 2 mit Fasermaterial 4 belegt.

Das Fasermaterial kann dabei von den Ablegeeinheiten 3, 3', 3" in einem Vorratsabschnitt mitgeführt werden oder über eine externe Zuführung zugeführt werden.

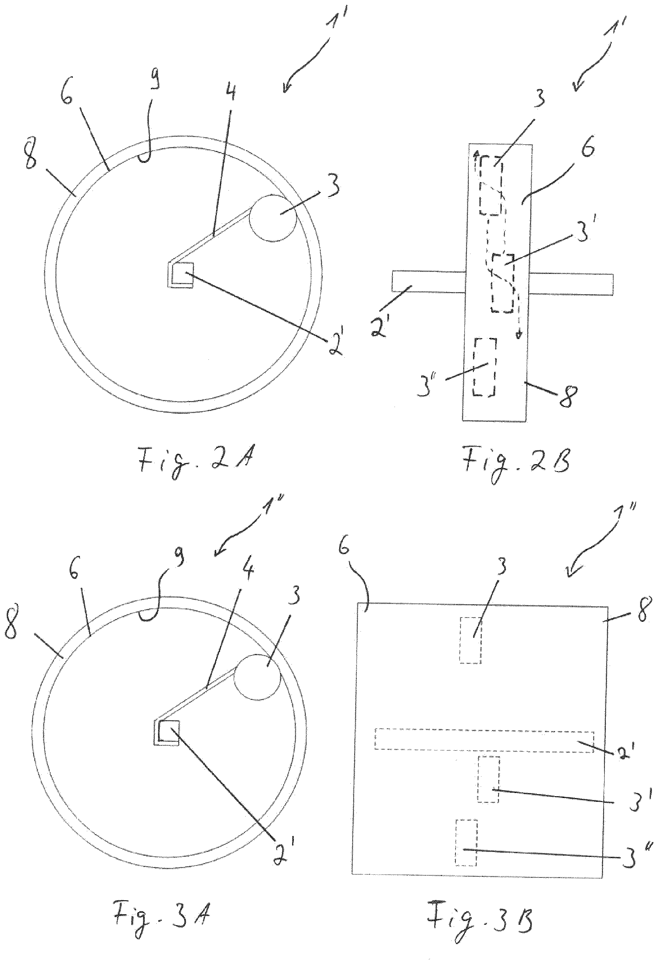

Fig. 2A zeigt eine schematisch dargestellte Vorderansicht einer Vorrichtung 1' zur Herstellung eines Faserverbundbauteils gemäß einer weiteren Ausführungsform.

Bei dieser Ausführungsform ist im Unterschied zu Fig. 1 ein Hohlkörper 8 als Lauffläche 6 vorgesehen, dessen Innenseite 9 die Lauffläche 6 bildet. Das formgebende Werkzeug 2' ist hier von der Lauffläche 6 beabstandet und zumindest abschnittsweise innerhalb des Hohlkörpers 8 angeordnet. Die Ablegeeinheiten 3, 3', 3" bewegen sich auf der Lauffläche und umwickeln oder umflechten dabei das Werkzeug 2', wodurch eine Faserablage auf dem Werkzeug 2' erfolgt.

Fig. 2B zeigt eine schematisch dargestellte Seitenansicht einer Vorrichtung zur Herstellung eines Faserverbundbauteils gemäß einer weiteren Ausführungsform.

Eine beispielhafte Fortbewegungsbahn der Ablegeeinheiten 3, 3', 3" ist mit gestrichelt Pfeilen angedeutet.

Das Umflechten oder Umwickeln des Werkzeugs 2' erfolgt in einer vorbestimmten Weise. Beispielsweise können sich die Bahnen der Fortbewegung der Ablegeeinheiten 3, 3', 3" beim Umrunden des Werkzeugs 2' regelmäßig in der Art eines Maitanz-Musters kreuzen, sodass ein typisches Flechtenmuster des Fasermaterials 4 auf dem Werkzeug 2' erzeugt wird. Auch andere, insbesondere auch komplexere, Flechtmuster sind bei entsprechend angepasster Fortbewegung herstellbar.

In der dargestellten Ausführungsform wird das Werkzeug, welches eine Länge aufweist, die größer als die Tiefe des Hohlkörpers 8 bzw. die Breite der Lauffläche 6 ist, während dem Umflechten durch den Hohlkörper 8 hindurchgeführt. Das Durchführen wird, insbesondere kontinuierlich, vorgenommen.

Die Fig. 3A, 3B zeigen die Vorrichtung zur Herstellung eines Faserverbundbauteils mit einer ersten Abwandlung.

Im Unterschied zur Ausführungsform gemäß Fig. 2 A und 2 B weist die Lauffläche 6 hier eine Breite bzw. der Hohlkörper eine Tiefe auf, die größer als die Länge des Werkzeugs 2' ausgebildet ist. Hier kann das Werkzeug 2' daher stationär innerhalb des Hohlkörpers angeordnet sein, wobei die Ablegeeinheiten 3, 3', 3" sich auch axial entlang des Hohlkörpers fortbewegen und so das Werkzeug 2' vollständig umwickeln oder umflechten können.

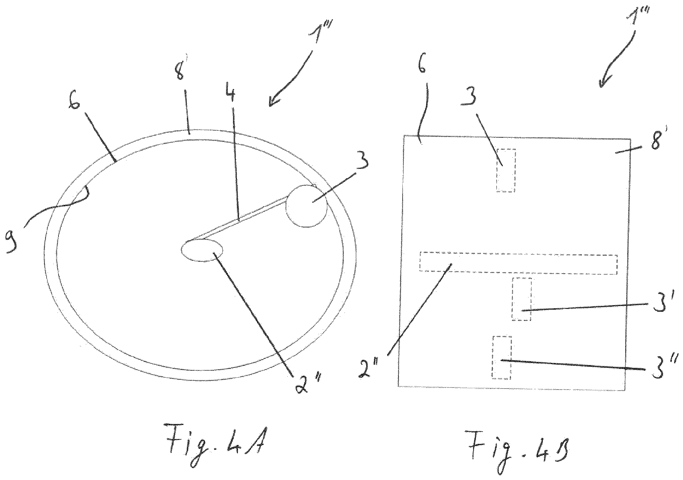

Die Fig. 4A, 4B zeigen die Vorrichtung gemäß Fig. 3A, 3B mit einer weiteren Abwandlung.

Bei dieser Abwandlung ist exemplarisch eine komplexere Form eines Werkzeugs 2" dargestellt. Der Hohlkörper 8' weist eine zu der Form des Werkzeugs 2" passende Form auf. Sich verändernde Abstände des Werkzeugs 2" zu einer Mittelachse werden dabei an dem Hohlkörper 8 ebenenfalls verändert und so ausgeglichen. In der dargestellten rein beispielhaften Ausführung handelt es sich um eine im Querschnitt elliptische Form des Werkzeugs 2" und des Hohlkörpers 8.

Anstatt oder zusätzlich zu einer elliptischen Form sind auch jegliche andere Arten komplexer Formen denkbar. Beispielsweise könnten das Werkzeug 2" und dementsprechend auch der Hohlkörper 8' sich in ihrer Längsrichtung verjüngen, insbesondere kalottenförmig ausgebildet sein. Ferner könnten das Werkzeug 2" und der Hohlkörper 8' auch einer anderen sich in Quer- und Höhenrichtung verändernden Form folgen.

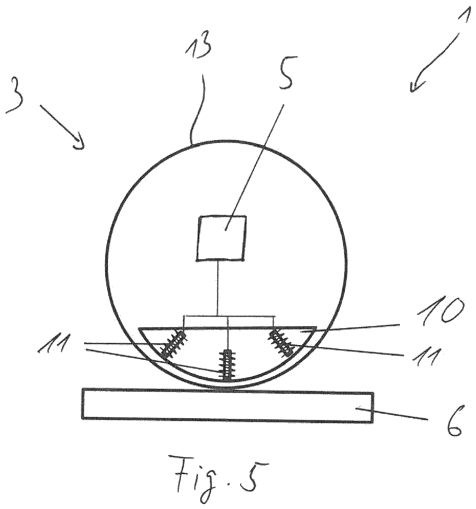

Fig. 5 zeigt eine schematische Schnittansicht einer Ausführungsform einer Vorrichtung 1 zur Herstellung eines Faserverbundbauteils. Es kann sich dabei um eine gemäß jeder der Fig. 1 bis 4B ausgebildete Vorrichtung 1; 1'; 1"; 1‴handeln.

Bei dieser Ausführungsform ist die Lauffläche 6 ferromagnetisch ausgebildet. Die Ablegeeinheit 3 weist ein kugelförmiges Gehäuse 13 auf. Alternativ zu einem kugelförmigen Gehäuse kann das Gehäuse auch als ein zylinderförmiges, insbesondere kreiszylinderförmiges, Gehäuse ausgebildet sein.

Innerhalb des Gehäuses 13 ist eine beweglich entlang der Innenwand des Gehäuses 13 laufende Antriebseinrichtung 10 vorgesehen. Die Antriebseinrichtung 10 ist als kugelabschnittsförmiges, in Umfangsrichtung des Gehäuses 13 bewegliches Pendel ausgebildet und weist in unterschiedliche radiale Richtungen wirkend ansteuerbare Magnete 11 auf. Im Fall eines kreiszylinderförmigen Gehäuses handelt es sich entsprechend um ein zylinderabschnittförmiges Pendel.

Wird die Antriebseinrichtung 10 durch ein Zusammenwirken der Magnete 11 mit der ferromagnetischen Lauffläche 6 hinsichtlich ihrer Ausrichtung relativ zum Gehäuse 13 verlagert, bringt dies auch das Gehäuse 13 dazu, in Richtung Antriebseinrichtung zu folgen bzw. zu rollen.

Die Magnete 11 werden zur Fortbewegung der Ableseeinheit 3 mittels der Steuereinrichtung 5 entsprechend angesteuert.

Alternativ zu einem frei beweglichen Pendel können an der Innenseite des Gehäuses 13 auch Führungseinrichtungen, beispielsweise ein Schienensystem oder dergleichen, zur Führung der Antriebseinrichtung 10 vorgesehen sein.

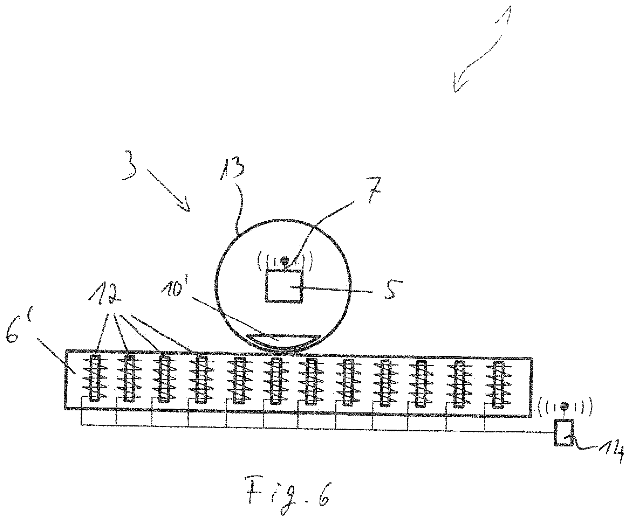

Fig. 6 zeigt eine schematische Schnittansicht einer weiteren Ausführungsform einer Vorrichtung zur Herstellung eines Faserverbundbauteils. Es kann sich dabei ebenfalls um eine gemäß jeder der Fig. 1 bis 4B ausgebildete Vorrichtung 1; 1'; 1"; 1‴ handeln.

Bei dieser Ausführungsform weist die Lauffläche 6' eine Vielzahl von steuerbaren Magneten 12 auf. Die Ablegeeinheit 3 weist eine damit zusammenwirkende Antriebseinrichtung 10' auf, welche beispielhaft ebenfalls als freibewegliches entlang der Gehäuse Innenfläche bewegliches Pendel vorgesehen ist. Es handelt sich hier um ein ferromagnetisches Pendel.

Die steuerbaren Magnete 12 sind mit einer Empfangseinrichtung 14 gekoppelt, welche ausgebildet ist, Steuerbefehle der Steuereinrichtung 5 der Ablegeeinheit 3 an die einzelnen Magnete 12 weiterzugeben. Die Steuereinrichtung 5 ist mit Kommunikationsmitteln 7 der Ablegeeinheit 3 gekoppelt, so dass Steuersignale an die Empfangseinrichtung 14 gesendet werden können.

Somit ist die Steuereinrichtung 5 in der Lage, die steuerbaren Magnete 12 einzeln in zur Fortbewegung geeigneter Weise anzusteuern und dabei ein magnetisches Feld zur Anziehung der Antriebseinrichtung 10' zu erzeugen. Wird die Antriebseinrichtung 10' beispielsweise von einem seitlich davon angeordneten Magneten 12 angezogen, so wird sie relativ zum Gehäuse 13 der Ablegeeinheit 3 aus einer Ruhestellung ausgelenkt. Somit wird auch das Gehäuse 13 und damit die gesamte Ablegeeinheit dazu gebracht, in Richtung des das Magnetfeld momentan erzeugenden Magneten 12 zu folgen bzw. zu rollen.

Die Magnete 12 werden zur Fortbewegung der Ablegeeinheit 3 mittels der Steuereinrichtung 5 entsprechend angesteuert.

Im Folgenden werden mögliche Ausführungen der Ablegeeinheit 3 beschrieben:

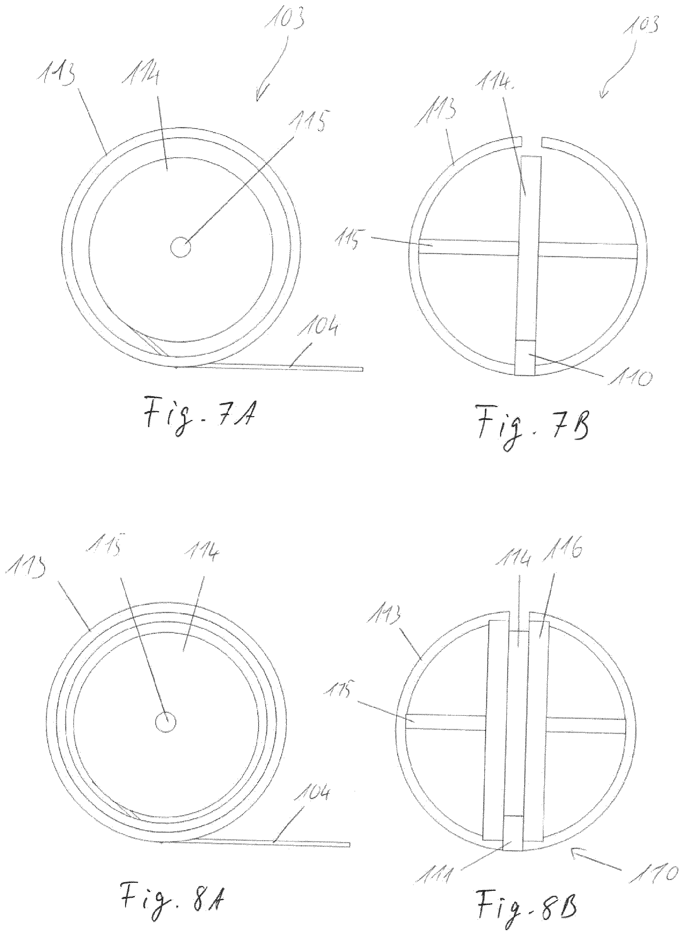

Fig. 7A zeigt eine schematische Längsschnittansicht einer kugelförmigen Ablegeeinheit 103. Fig. 7B zeigt eine schematische Querschnittsansicht der Ablegeeinheit 103 gemäß Fig. 7A.

Die Ablegeeinheit 103 weist ein kugelförmiges Gehäuse 113 auf. Innerhalb des Gehäuses 113 ist eine Faserspule 114 gelagert. Zur Lagerung der Faserspule 114 ist eine Halterungseinrichtung 115 in Form einer Achse vorgesehen, welche die Faserspule 114 mechanisch gegen das Gehäuse 113 abstützt. Die Halterungseinrichtung 115 kann relativ zum Gehäuse beweglich oder fest vorgesehen sein.

Bei einer Fortbewegung der Ablegeeinheit 103 rollt das Gehäuse 113 auf einer zugeordneten hier nicht dargestellten Lauffläche ab. Dabei wird Fasermaterial 104 von der Faserspule 114 abgewickelt und auf einem hier nicht dargestellten Werkzeug abgelegt.

Zur Fortbewegung der Ablegeeinheit 103 ist eine Antriebseinrichtung 110 vorgesehen. Diese weist entlang einer inneren Mantelfläche des Gehäuses 113 bewegbare Magnete, die steuerbar oder als Permanentmagnete ausgebildet sind und/oder ein ferromagnetisches Material auf. Insbesondere kann es sich um eine Antriebserrichtung wie in Bezug auf Fig. 5 oder Fig. 6 beschrieben handeln.

Alternativ zu den bewegbaren Magneten oder dem ferromagnetischen Material kann die Antriebseinrichtung 110 auch als in dem Gehäuse integriert vorgesehene oder an das Gehäuse angrenzende Schicht mit darin eingelassenen steuerbaren Magneten ausgebildet sein.

Fig. 8A, 8B zeigen eine Ablegeeinheit gemäß einer weiteren Ausführungsform.

Bei dieser Ausführungsform ist die Antriebseinrichtung 110 mit einem über eine Führung 116 umfänglich an dem Gehäuse 113 umlaufenden Magneten 111 ausgebildet. Es kann sich dabei um einen permanenten oder um einen steuerbaren Magneten 111 handeln.

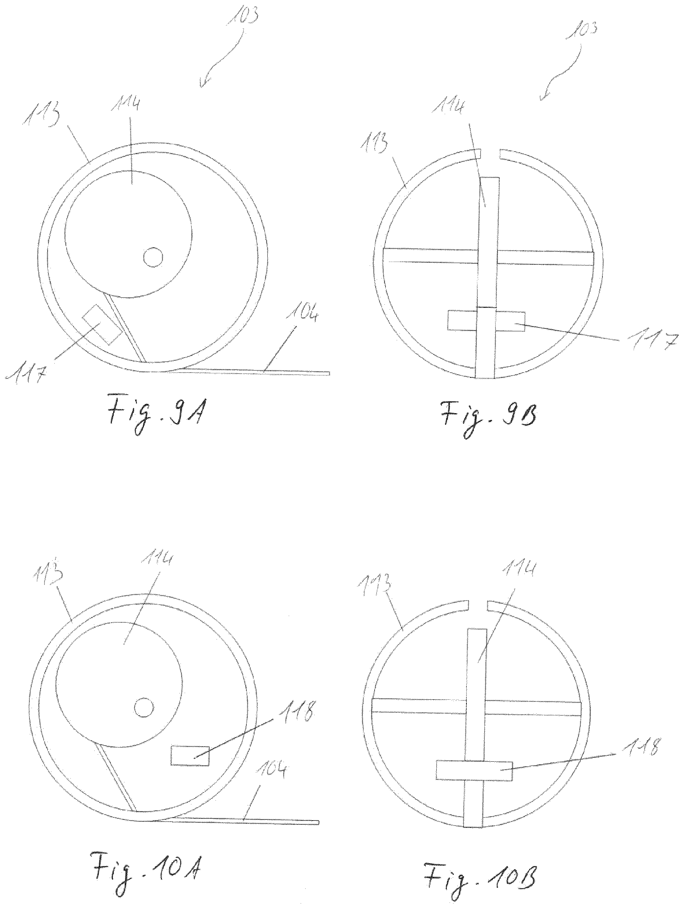

Fig. 9A, 9B zeigen eine Ablegeeinheit gemäß einer noch weiteren Ausführungsform.

Hierbei ist ein dem Fasermaterial 104 vorlaufender Sensor 117 vorgesehen. Zur besseren Übersichtlichkeit ist die Antriebseinrichtung 110 in der gezeigten Darstellung ausgeblendet.

Der vorlaufende Sensor 117 dient zur Messung der Faserqualität des Fasermaterials 104. Bei dem Sensor 117 kann es sich um unterschiedlichste Arten von Sensoren handeln, beispielsweise um einen Laserlichtschnittsensor, Polarisationslichtsensor, Kontakt-Bildsensor (CIS, Contact Image Sensor) oder dergleichen.

Mittels des Sensors 117 können einzelne oder mehrere unterschiedlicher Qualitätsfaktoren erfasst werden. Beispielsweise kann eine Messung der Breite, eines Faserstranggewichts oder eines Harzbenetzungsgrades der abzulegenden Faserlage des Fasermaterials 104 vorgesehen sein. Ferner können mittels des Sensors Verunreinigungen, wie beispielsweise Folienreste eines Backing-Papiers, erkannt werden.

Alternativ oder zusätzlich ist der vorlaufende Sensor 117 zur Messung der Eignung der Oberfläche eines Werkzeugs oder Bauteils, auf welchem das Fasermaterial 104 abzulegen ist, vorgesehen. Somit wird sichergestellt, dass eine Ablage nur auf geeignetem Untergrund, insbesondere dem Werkzeug, erfolgt. Dabei können beispielsweise Defekte, Verunreinigungen oder Fremdstoffe an der Oberfläche erkannt werden. Somit ist es ermöglicht, über eine hier nicht dargestellte Steuereinrichtung 105 der Ablegeeinheit 103, welche die Antriebseinrichtung 110 zur Fortbewegung der Ablegeeinheit 103 ansteuert, auf derartige Defekte oder Fremdstoffe zu reagieren. Zum einen kann als Reaktion die Ablage des Fasermaterials 104 unterbrochen und eine Warnmeldung an einen Operateur ausgegeben werden. Des Weiteren kann, insbesondere automatisiert, eine Bahnkorrektur der Ablage des Fasermaterials 104 vorgenommen werden. Ferner wäre es denkbar, als Reaktion automatisiert oder manuell gesteuert eine Gegenmaßnahme einzuleiten. Beispielsweise könnte über einen an der Ablegeeinheit vorgesehenen Aktuator, insbesondere eine Reinigungsdüse, eine Reinigung, insbesondere durch Ausgabe von Druckluft, zur Entfernung eines Fremdstoffs oder einer Verunreinigung erfolgen.

Die Fig. 10A, 10B zeigen eine Ablegeeinheit 103 gemäß einer weiteren Ausführungsform. Zur besseren Übersichtlichkeit ist die Antriebseinrichtung 110 hier ebenfalls ausgeblendet.

Bei dieser Ausführungsform ist ein dem Fasermaterial 104 nachlaufender Sensor 118 zum Erfassen der Anordnung und/oder Qualität der Ablage des Fasermaterials 104 vorgesehen. Auch hier kann es sich bei dem Sensor 118 um unterschiedlichste Arten von Sensoren handeln. Beispielsweise kann ein Laserlichtschnittsensor, Polarisationslichtsensor, Kontakt-Bildsensor (CIS, Contact Image Sensor) oder dergleichen vorgesehen sein. Insbesondere können somit Fehler der Ablage des Fasermaterials 104 erkannt werden. Beispielsweise kann es sich bei erkennbaren Fehlern des abgelegten Fasermaterials 104 um Lücken zwischen den abgelegten Faserlagen oder Bändern (Tapes), eine Verschlingung (sogenannten Twists), eine Spaltung eines Faserstrangs (sogenanntes Splice), ein unerwünschter Überlapp oder eine unerwünschte Verknotung (sogenannte Fuzzballs) sowie etwaige unerwünschte Folienreste handeln.

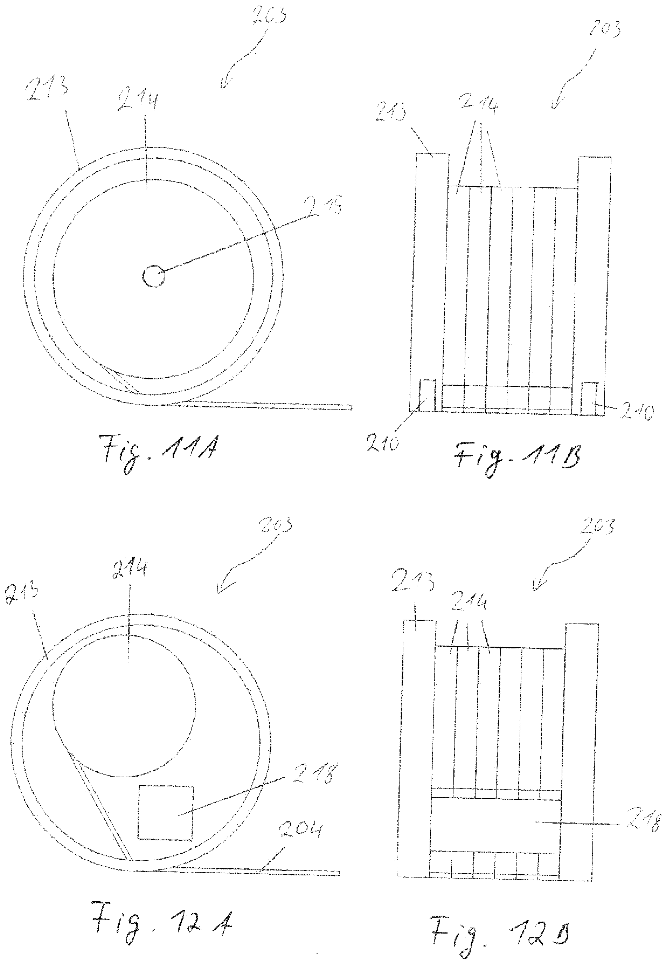

Fig. 11A zeigt eine schematische Längsschnittansicht einer zylinderförmigen Ablegeeinheit 203. Fig. 11B zeigt eine schematische Querschnittansicht der Ablegeeinheit 203 gemäß Fig. 11A.

Im Unterschied zu den kugelförmigen Ablegeeinheiten 103 ist die zylinderförmige Ablegeeinheit 203 mit einem zylinderförmigen, hier kreiszylinderförmigen, Gehäuse 213 gebildet.

Innerhalb des Gehäuses 213 ist beispielhaft eine Mehrzahl von sechs nebeneinander angeordneten Faserspulen 214 vorgesehen. Es kann eine beliebige andere Anzahl von Faserspulen, insbesondere auch eine einzelne Faserspule, vorgesehen sein.

Eine Mantelfläche des zylinderförmigen Gehäuses 213 ist im Bereich der Faserspulen 214 ausgespart.

Zur Lagerung der Faserspulen 214 ist eine zur besseren Übersichtlichkeit nur in Fig. 11A dargestellte Halterungseinrichtung 215 in Form einer Achse vorgesehen, welche die Faserspulen 214 mechanisch gegen das Gehäuse 213 abstützt.

Bei einer Fortbewegung der Ablegeeinheit 203 rollt das Gehäuse 213 auf einer zugeordneten Lauffläche ab. Dabei wird Fasermaterial 204 von den Faserspulen 214 abgewickelt und auf dem Werkzeug, abgelegt.

Zum Antrieb der Fortbewegung der Ablegeeinheit 203 weist das zylinderförmige Gehäuse 213 eine Antriebseinrichtung 210 auf. Diese ist mit entlang einer inneren Mantelfläche des Gehäuses 213 bewegbaren, insbesondere steuerbaren oder permanenten, Magneten ausgebildet. Alternativ oder zusätzlich kann die Antriebseinrichtung 210 ein ferromagnetisches Material enthalten. Es kann sich dabei insbesondere um eine Antriebseinrichtung wie in Bezug auf Fig. 5 oder Fig. 6 beschrieben handeln.

Ferner kann alternativ oder zusätzlich zu den bewegbaren Magneten oder dem ferromagnetischen Material die Antriebseinrichtung 210 auch als in dem Gehäuse 213 vorgesehene oder an das Gehäuse 213 angrenzende Schicht mit darin eingelassenen steuerbaren Magneten ausgebildet sein.

Die Fig. 12A, 12B zeigen eine Ablegeeinheit 203 gemäß einer weiteren Ausführungsform. Zur besseren Übersichtlichkeit ist die Antriebseinrichtung 210 hier ausgeblendet.

Gemäß der hier dargestellten Ausführungsform ist ein dem Fasermaterial 204 nachlaufender Sensor 218 zum Erfassen der Anordnung und/oder Qualität der Ablage des Fasermaterials 204 vorgesehen. Es kann sich bei dem Sensor 218 um unterschiedlichste Arten von Sensoren zur Erfassung von unterschiedlichsten Fehlern der Ablage des Fasermaterials 204 handeln, wie in Bezug auf Fig. 10A und 10B zum Sensor 118 beschrieben.

Die Faserspulen 214 sind hier mit einem geringeren Durchmesser ausgebildet. Somit steht eine verlängerte Prüfstrecke zum Prüfen bereit, wobei der Sensor 218 derart positioniert ist, dass er auch die Faserqualität des Fasermaterials 204 vor dem Ablegen messen kann.

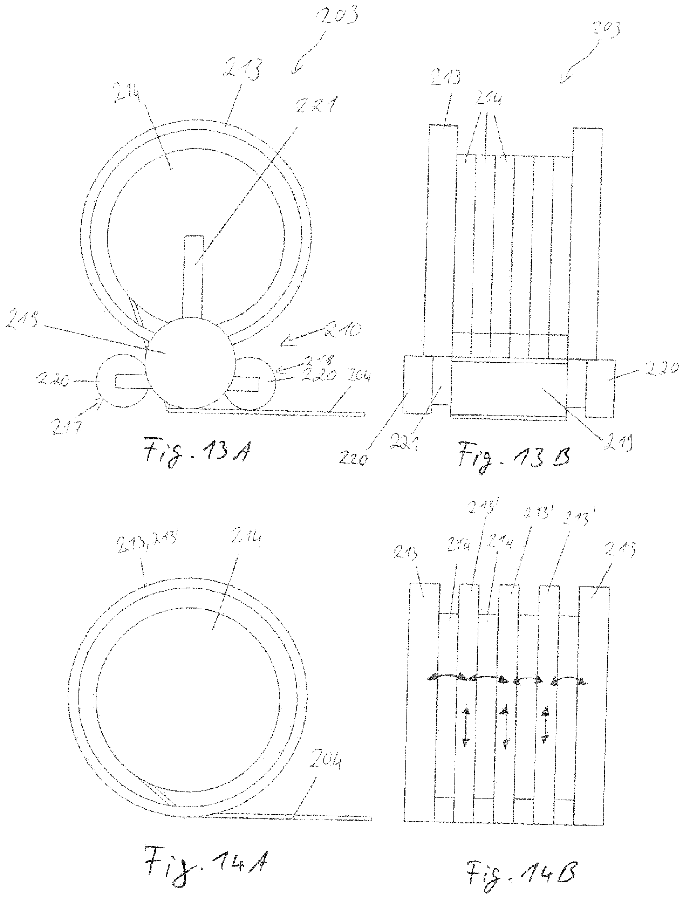

Die Fig. 13A, 13B zeigen eine Ablegeeinheit 203 mit einer Antriebsrolle 219. Die Antriebseinrichtung 210 ist hier zusätzlich zu der Antriebsrolle 219 mit seitlich angeordneten Stützrollen 220 gebildet. Die Antriebseinrichtung 210 ist über eine Koppeleinrichtung 221 mit dem Gehäuse 213 gekoppelt und trägt das Gehäuse 213. Im Unterschied zu den vorangehend beschriebenen zylinderförmigen Ablegeeinheiten 203 rollt das Gehäuse 213 hier somit nicht selbst zur Fortbewegung auf der Lauffläche ab. Diese Funktion wird stattdessen von der Antriebsrolle 219 und den Stützrollen 220 erfüllt.

Die Antriebsrolle 219 ist vorzugsweise magnetisch angetrieben. Dazu weist sie beispielsweise zur besseren Übersichtlichkeit nicht dargestellte steuerbare Magnete auf, welche mittels einer Steuereinrichtung 205 der Ablegeeinheit 203 zur magnetisch angetriebenen Fortbewegung ansteuerbar sind.

Alternativ oder zusätzlich können in der Antriebsrolle 219 Permanentmagnete und/oder ein ferromagnetisches Material enthalten sein, wobei ein Antrieb der 219 mittels eines magnetischen Feldes vorgesehen ist, das von einer für die Ablegeeinheit 203 vorgesehenen zugeordneten Lauffläche erregbar ist. Die Lauffläche kann dazu mit einer Vielzahl steuerbarer Magnete versehen sein, wie beispielhaft in Bezug auf Fig. 6 beschrieben.

Ferner kann die Antriebsrolle auch mit einem darin beweglichen magnetischen und/oder ferromagnetischen Pendel ausgebildet sein.

Die Fig. 14A, 14B zeigen eine Ablegeeinheit 203 mit beweglichen Faserspulen 214.

Die beweglichen Faserspuren 214 sind voneinander beabstandet angeordnet. Im Bereich eines Zwischenraums zwischen den Faserspulen 214 ist jeweils ein Gehäuseabschnitt 213' vorgesehen, welcher derart ausgebildet ist, dass er eine Bewegung der Faserspulen 214 im Bereich des Zwischenraums zulässt.

Der Abstand zwischen den Faserspulen 214 ist insbesondere gleich der Breite einer Faserspule 214 und/oder einer damit jeweils ablegbaren Faserlage bzw. Legebahn des Fasermaterials 204.

Die Faserspulen 214 sind seitlich verkippbar beweglich vorgesehen. Demgemäß sind die Faserspuren 214 verkippbar an der hier zur besseren Übersichtlichkeit nicht dargestellten Haltevorrichtung 215 gelagert. Dadurch kann auch auf gekrümmten oder doppelt gekrümmten Oberflächen Fasermaterial 204 abgelegt werden.

Die Gehäuseabschnitte 213' sind in einer Richtung senkrecht zu einer Achse des Gehäuses 213, hier insbesondere vertikal, beweglich und können somit Unebenheiten eines Werkzeugs ausweichen. Alternativ zu einer Verschieblichkeit der Gehäuseabschnitte 213' wäre es auch denkbar, die Gehäuseabschnitte 213' zum Ausweichen von Unebenheiten elastisch verformbar bzw. kompressibel vorzusehen.

Zum durchgängigen Ablegen von Fasermaterial wird mit einer derartigen Ablegeeinheit 203 vorzugsweise dieselbe Strecke zweimal in gleicher oder entgegengesetzter Richtung mit einem Versatz von einer Faserspulenbreite bzw. Faserlagenbreite überfahren.

Einzelne oder alle der Gehäuseabschnitte 213' können mit zusätzlichen Antriebsvorrichtungen 210 versehen sein.

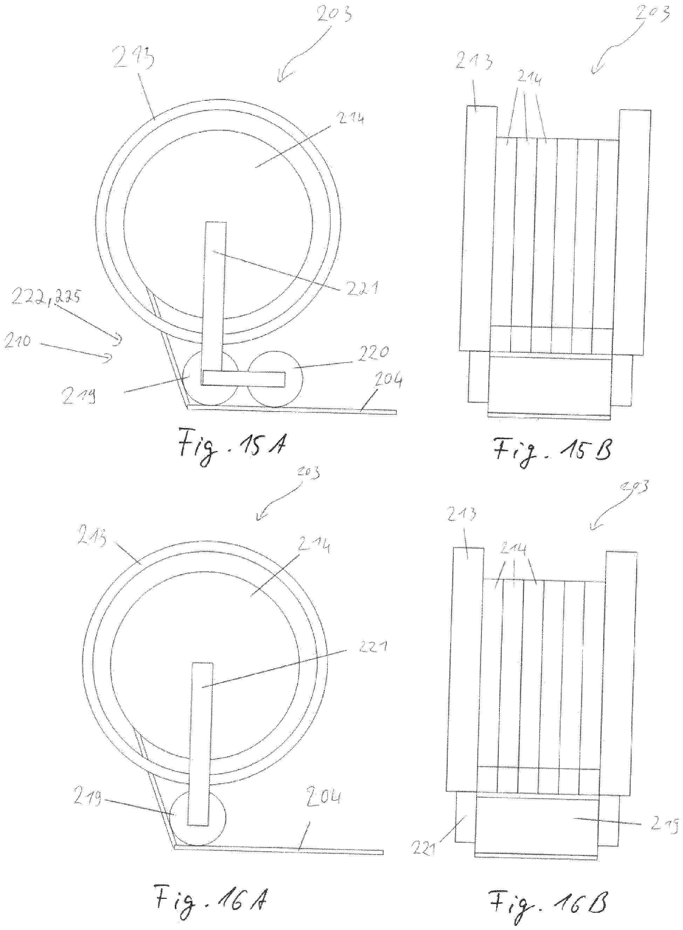

Die Fig. 15A, 15B zeigen eine Ablegeeinheit 203 mit einer Ablegeeinrichtung 222.

Sowohl die Antriebseinrichtung 210 als auch die Ablegeeinrichtung 222 sind mit der Antriebsrolle 219 gebildet. Die Antriebseinrichtung 210 und die Ablegeeinrichtung 222 weisen zusätzlich zur Antriebsrolle 219 seitliche Stützrollen 220 auf und sind über eine Koppeleinrichtung 221 mit dem Gehäuse 213 gekoppelt.

Die Ablegeeinrichtung 222 dient zum definierten Ablegen und/oder Kompaktieren einer Faserlage des Fasermaterials 204. Die Ablegeeinheit 203 kann somit vorteilhaft auch eingesetzt werden, um bereits abgelegtes Fasermaterial zu kompaktieren.

Die mittels der Ablegeeinrichtung 222 zum definierten Ablegen und/oder Kompaktieren aufbringbaren Kräfte können über die Stärke des zum Fortbewegen und/oder Halten der Ablegeeinheit auf der Lauffläche vorgesehene Magnetfeldes reguliert bzw. eingestellt werden.

Die Stützrollen 220 können als ein nachlaufendes Sensorsystem ausgebildet sein, welches eine Funktionalität analog zum nachlaufenden Sensor 218 aufweist. Alternativ oder zusätzlich können die Stützrollen 220 zum Kompaktieren des Fasermaterials 204 vorgesehen sein

Die Antriebsrolle 219 kann als Heizeinrichtung zum Aktivieren eines Harzes oder Binders einer abgelegten Faserlage des Fasermaterials 204 vorgesehen sein. Insbesondere ist die Antriebsrolle mit einem magnetischen Antrieb vorgesehen, der bei Bewegung der Ablegeeinheit Wirbelströme erzeugt, sofern diese ferromagnetisches Material enthalten. Die Wirbelströme heizen die Antriebsrolle und/oder die Lauffläche lokal aufgrund derer elektrischen Widerstände auf. Die Heizeinrichtung ist somit als eine sich bei Fortbewegung aufheizende Antriebsrolle und/oder als eine die Lauffläche aufheizende Antriebsrolle ausgebildet.

Vorzugsweise ist eine kombinierte Ausbildung der Antriebsrolle 219 als Ablegeeinrichtung 222 zum definierten Ablegen und/oder Kompaktieren und als Heizeinrichtung 225 zum Aktivieren eines Harzes oder Binders vorgesehen.

Die Fig. 16A, 16B zeigen eine Ablegeeinheit 203 gemäß einer weiteren Ausführungsform.

Im Unterschied zur Ausführungsform gemäß Fig. 15A und 15B ist die Antriebsrolle 219 hier als einzige das Gehäuse 213 tragende Rolle vorgesehen.

Zur Stabilisierung der Ablegeeinheit 203 kann eine zusätzliche nicht dargestellte Abstützeinrichtung vorgesehen sein. Alternativ kann eine nicht dargestellte Steuereinrichtung 205 zur Ansteuerung der Antriebsrolle 219 vorgesehen sein, welche die Antriebsrolle 219 derart ansteuert, dass die Ablegeeinheit 203 stehend auf der Antriebsrolle 219 ständig in Balance bzw. im Gleichgewicht gehalten wird. Möglich ist dabei auch, einen weiteren gegensteuernden Motor vorzusehen. Dieser kann an einer Verbindung zwischen der Koppeleinrichtung 221 und dem Gehäuse 213 vorgesehen sein und zusätzlich zur Stabilisierung der Ablegeeinheit 203 dienen.

Auch hier ist die Antriebsrolle 219 vorzugsweise magnetisch angetrieben ausgebildet. Sie kann gleichzeitig für den Vortrieb zur Fortbewegung der Ablegeeinheit 203 und zum Kompaktieren des abgelegten Fasermaterials 204 dienen.

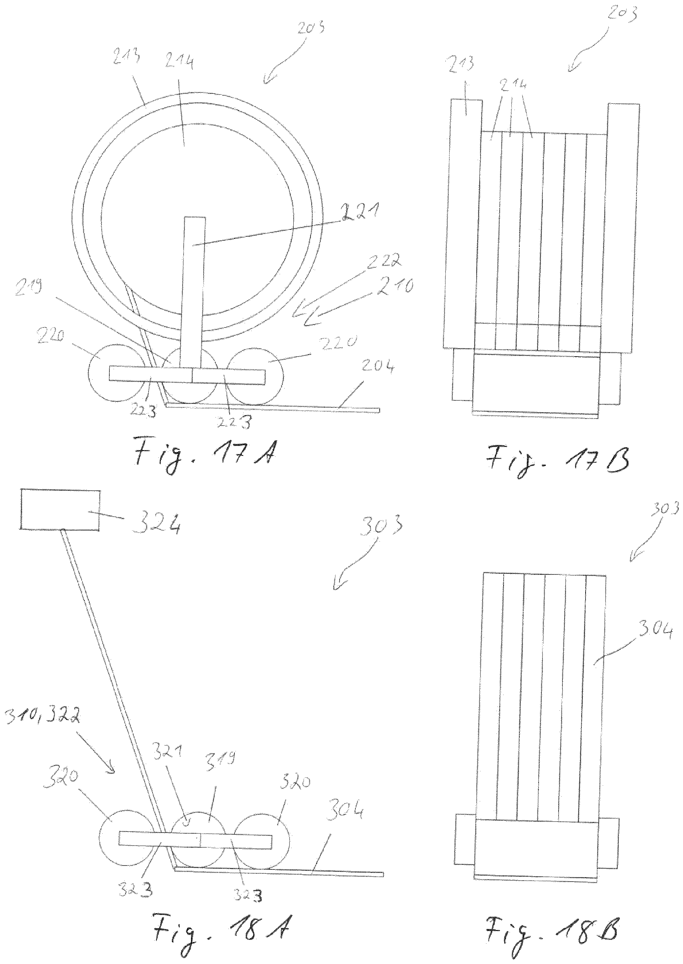

Die Fig. 17A, 17B zeigen eine Ablegeeinheit 203 gemäß einer noch weiteren Ausführungsform.

Die hier gezeigte Ausführungsform ist an die Ausführungsform gemäß Fig. 15A und 15B angelehnt. Im Unterschied dazu ist zusätzlich eine dem Fasermaterial 204 vorlaufende Stützrolle 220 vorgesehen.

Die Koppeleinrichtung 221 ist in diesem Fall mehrteilig mit zwei Verbindungsabschnitten 223 zu den Stützrollen 220 ausgebildet, wobei die vorlaufende und die nachlaufende Stützrolle 220 über die Verbindungsabschnitte 223 beweglich in Bezug auf die Antriebsrolle 219 gelagert sind. Somit können auch gekrümmte Oberflächen zuverlässig überfahren werden.

Die vorlaufende Stützrolle 220 kann einen vorlaufenden Sensor 217 enthalten. Der vorlaufende Sensor 217 ist in diesem Fall zur Messung der Faserqualität des Fasermaterials 204 und/oder zur Messung der Eignung der Oberfläche eines Werkzeugs oder Bauteils, auf welchem das Fasermaterial 104 abzulegen ist, vorgesehen. Bei dem Sensor 217 kann es sich um unterschiedlichste Arten von Sensoren handeln, wie sie samt ihrer Funktionalität wie sie in Bezug auf Fig. 9A und 9B hinsichtlich des vorlaufenden Sensors 117 beschrieben sind.

Fig. 18A, 18B zeigen eine Ablegeeinheit 303 mit einer externen Zuführeinrichtung 324 für Fasermaterial 304.

Die Zuführeinrichtung 324 kann beispielsweise an einer frei beweglichen Aufhängung gelagert vorgesehen sein, sodass sie sich frei mit der Ablegeeinheit 303 fortbewegen kann. Vorzugsweise ist das Fasermaterial 304 in der Zufuhreinrichtung 324 bevorratet. Dementsprechend weist die Ablegeeinheit 303 hier kein Gehäuse zur Bevorratung von Fasermaterial auf.

Die Ablegeeinheit 303 weist eine im Vergleich zur Ausführungsform gemäß Fig. 17A und 17B gleich aufgebaute Antriebsvorrichtung 310 bzw. Ablegeeinrichtung 322 auf. Die Koppeleinrichtung 321 ist hier ohne vertikalen Abschnitt lediglich mit den Verbindungsabschnitten 323 zur beweglichen Lagerung der vorderen und hinteren Stützrollen 320 vorgesehen.

Die vorderen und hinteren Stützrollen 320 können ebenfalls, wie vorstehend in Bezug auf die Ablegeeinheit 203 beschrieben, vor- oder nachlaufende Sensoren aufweisen. Die dem Fasermaterial 304 nachlaufende Stützrolle 320 kann optional oder zusätzlich zum Kompaktieren des Fasermaterials 304 vorgesehen sein.

Die Antriebsrolle 319 ist bevorzugt ebenfalls magnetisch angetrieben ausgebildet. optional oder zusätzlich kann sie als Heizelement ausgebildet sein.

Obwohl die vorliegende Erfindung anhand bevorzugter Ausführungsbeispiele vorliegend beschrieben wurde, ist sie darauf nicht beschränkt, sondern auf vielfältige Weise modifizierbar.

Beispielsweise können die Ablegeeinrichtung und/oder die Heizeinrichtung auch integral mit einer in dem Gehäuse vorgesehenen Antriebseinrichtung ausgebildet sein.

Die Antriebseinrichtung kann ferner optional oder zusätzlich auch als eine in einer Außenhaut oder als eine nahe an einer Außenhaut vorgesehene Schicht der Ablegeeinheit, die mittels einer Ansteuerung magnetisierbar ist, ausgebildet sein. Insbesondere können ansteuerbare Elektromagnete in die Außenhaut bzw. in die Schicht integriert sein. Zur Fortbewegung der Ablegeeinheit wird das Magnetfeld durch eine entsprechende Ansteuerung in der gewünschten Fahrtrichtung entlang der Außenhaut bzw. magnetisierbaren Schicht verschoben.

Zusätzlich zu einem steuerbaren Magnetfeld kann auch ein ständig wirkendes oder statisches Magnetfeld zwischen der Ablegeeinheit und der Lauffläche vorgesehen sein. Damit kann die Ablegeeinheit unabhängig von der Fortbewegung an der Lauffläche gehalten werden, beispielsweise auch bei über Kopf arbeiten. Ferner kann so auch eine mittels der Ablegeeinheit auf das Fasermaterial aufgebrachte Kompaktierkraft auf einen vorbestimmten Wert eingestellt werden.

### Bezugszeichenliste

- 1; 1'; 1"; 1‴: Vorrichtung
- 2; 2'; 2": Werkzeug
- 3, 3', 3": Ablegeeinheit
- 4: Fasermaterial
- 5; 5'; 5": Steuereinrichtung
- 6; 6': Lauffläche
- 7; 7'; 7": Kommunikationsmittel
- 8; 8': Hohlkörper
- 9: Innenseite
- 10: Antriebseinrichtung
- 11: Magnet
- 12: Magnet
- 13: Gehäuse
- 14: Empfangseinrichtung

- 103: Ablegeeinheit
- 104: Fasermaterial
- 110: Antriebseinrichtung
- 113: Gehäuse
- 114: Faserspule
- 115: Halterungseinrichtung
- 116: Führung
- 117: vorlaufender Sensor
- 118: nachlaufender Sensor

- 203: Ablegeeinheit
- 204: Fasermaterial
- 210: Antriebseinrichtung
- 213: Gehäuse
- 213': Gehäuseabschnitt
- 214: Faserspule
- 215: Halterungseinrichtung
- 217: vorlaufender Sensor
- 218: nachlaufender Sensor
- 219: Antriebsrolle
- 220: Stützrolle
- 221: Koppeleinrichtung
- 222: Ablegeeinrichtung
- 223: Verbindungsabschnitt
- 225: Heizeinrichtung

- 303: Ablegeeinheit
- 304: Fasermaterial
- 310: Antriebseinrichtung
- 319: Antriebsrolle
- 320: Stützrolle
- 321: Koppeleinrichtung
- 322: Ablegeeinrichtung
- 323: Verbindungsabschnitt
- 324: Zuführeinrichtung

## Patentansprüche

1. Vorrichtung (1; 1'; 1"; 1‴) zum Herstellen eines Faserverbundbauteils, mit einem formgebenden Werkzeug (2; 2'; 2"), wobei das formgebende Werkzeug (2; 2'; 2") als Lauffläche (6; 6') ausgebildet ist, und einer Ablegeeinheit (3; 103; 203; 303) mit:
einer Antriebseinrichtung (10; 10'; 110; 210; 310), welche zum magnetischen Zusammenwirken mit der ein Magnetfeld bereitstellenden und/oder ferromagnetischen Lauffläche (6; 6') zur Fortbewegung der Ablegeeinheit auf der Lauffläche (6; 6') ausgebildet ist, wobei
die Antriebseinrichtung (10; 110; 210; 310) steuerbare Magnete (11) aufweist, welche ausgebildet sind, die Ablegeeinheit (3; 103; 203; 303) bei Zusammenwirken mit der ferromagnetischen Lauffläche (6) an der Lauffläche (6) zu halten und/oder zu einer vorbestimmten Fortbewegung anzutreiben, oder wobei
die Antriebseinrichtung (10'; 110; 210; 310) ein ferromagnetisches Masseelement (10') aufweist, welches ausgebildet ist, die Ablegeeinheit (3; 103; 203; 303) bei Zusammenwirken mit der ein Magnetfeld bereitstellenden Lauffläche (6') an der Lauffläche (6') zu halten und/oder zu einer vorbestimmten Fortbewegung anzutreiben;
wobei die Ablegeeinheit (3; 103; 203; 303) durch magnetisches Zusammenwirken der Antriebseinrichtung (10; 110; 210; 310) mit der Lauffläche (6; 6') auf der Lauffläche (6; 6') fortbewegbar ist.

2. Vorrichtung (1; 1'; 1"; 1‴) nach Anspruch 1,
**dadurch gekennzeichnet,**
**dass** bei der Ablegeeinheit (3; 103; 203; 303) ein Aufnahmeabschnitt, insbesondere zum Vorhalten eines Vorrats an Fasermaterial, vorgesehen ist, welcher mit einem Gehäuse (13; 113; 213) gebildet ist.

3. Vorrichtung (1; 1'; 1"; 1‴) nach Anspruch 2,
**dadurch gekennzeichnet,**
**dass** die Antriebseinrichtung (10; 10'; 110; 210) an oder in dem Gehäuse (13; 113; 213) vorgesehen ist, wobei das Gehäuse (13; 113; 213) zur Fortbewegung der Ablegeeinheit (3; 103; 203) auf der Lauffläche (6; 6') abrollbar ausgebildet ist.

4. Vorrichtung (1; 1'; 1"; 1‴) nach Anspruch 3 ,
**dadurch gekennzeichnet,**
**dass** die Antriebseinrichtung (10; 10'; 110; 210) relativ zu dem Gehäuse (13; 113; 213), insbesondere umfänglich an dem Gehäuse (13; 113; 213), bewegliche Magnete (11) und/oder ein ferromagnetisches Masseelement (10') aufweist.

5. Vorrichtung (1; 1'; 1"; 1‴) nach Anspruch 2,
**dadurch gekennzeichnet,**
**dass** die Antriebseinrichtung (210) als mit dem Gehäuse (213) gekoppelte Antriebsrolle (219) ausgebildet ist.

6. Vorrichtung (1; 1'; 1"; 1‴) nach einem der vorangehenden Ansprüche,
**dadurch gekennzeichnet,**
**dass** die Antriebseinrichtung (10; 10'; 110; 210; 310) als Ablegeeinrichtung (222) zum definierten Ablegen und/oder Kompaktieren eines Fasermaterials (4; 104; 204; 304) auf einem Werkzeug ausgebildet ist.

7. Vorrichtung (1; 1'; 1"; 1‴) nach einem der vorangehenden Ansprüche,
**dadurch gekennzeichnet,**
**dass** die Antriebseinrichtung (10; 10'; 110; 210; 310) als Heizeinrichtung (225), insbesondere mittels Wirbelströmen beheizte Heizeinrichtung, zum Aktivieren eines Harzes oder Binders des Fasermaterials (4; 104; 204; 304) vorgesehen ist.

8. Vorrichtung nach einem der vorangehenden Ansprüche,
**dadurch gekennzeichnet,**
**dass** ein Hohlkörper (8; 8') vorgesehen ist, dessen Innenseite als eine Lauffläche (6; 6') für die Ablegeeinheit (3; 103; 203; 303) ausgebildet ist, auf der die Ablegeeinheit (3; 103; 203; 303) durch magnetisches Zusammenwirken mit der Lauffläche (6; 6') fortbewegbar ist, wobei das formgebende Werkzeug innerhalb des Hohlkörpers (8; 8') derart anordenbar ist, dass die sich auf der Lauffläche (6; 6') fortbewegende Ablegeeinheit (3; 103; 203; 303) das Werkzeug (2'; 2") mit dem Fasermaterial (4; 104; 204; 304) umwickelt oder umflicht.

9. Vorrichtung nach einem der vorangehenden Ansprüche,
**dadurch gekennzeichnet,**
**dass** die Lauffläche (6') steuerbare Magnete (12) enthält, welche zum Zusammenwirken mit der Antriebseinrichtung (10'; 110; 210; 310) zur magnetisch angetriebenen Fortbewegung der Ablegeeinheit (3; 103; 203; 303) auf der Lauffläche (6') ansteuerbar ausgebildet sind.

10. Vorrichtung nach Anspruch 9,
**dadurch gekennzeichnet,**
**dass** die Lauffläche (6') Kommunikationsmittel aufweist, welche ausgelegt sind, Steuerbefehle einer Steuereinrichtung, insbesondere einer in die Ablegeeinheit integrierten Steuereinrichtung (5), zum Ansteuern der steuerbaren Magnete (12) für die Fortbewegung der Ablegeeinheit (3; 103; 203; 303) zu übermitteln.

11. Verfahren zum Herstellen eines Faserverbundbauteils, mit den folgenden Verfahrensschritten:
Bereitstellen eines formgebenden Werkzeugs (2;2':2"), wobei das formgebende Werkzeug als Lauffläche (6; 6') ausgebildet ist, und einer magnetisch antreibbaren Ablegeeinheit (3; 103; 203; 303), welche zum Ablegen eines Fasermaterials (4; 104; 204; 304) auf dem Werkzeug (2; 2'; 2") ausgebildet vorgesehen wird, und
Ablegen des Fasermaterials (4; 104; 204; 304) auf dem formgebenden Werkzeug (2; 2'; 2") in einer vorbestimmten Faseranordnung durch magnetisch angetriebenes Fortbewegen der Ablegeeinheit (3; 103; 203; 303) auf der ein Magnetfeld bereitstellenden und/oder ferromagnetischen Lauffläche (6; 6').

## Claims

1. Apparatus (1; 1'; 1"; 1‴) for producing a fibre composite component, having a shaping tool (2; 2'; 2"), wherein the shaping tool (2; 2'; 2") is in the form of a running surface (6; 6'), and
a laying unit (3; 103; 203; 303) having:
a drive device (10; 10'; 110; 210; 310), which is designed to magnetically interact with the running surface (6; 6'), which is ferromagnetic and/or provides a magnetic field, for the purpose of advancing the laying unit on the running surface (6; 6'), wherein
the drive device (10; 110; 210; 310) comprises controllable magnets (11), which are designed to hold the laying unit (3; 103; 203; 303) on the running surface (6) and/or to drive said laying unit in a predetermined advancement upon interaction with the ferromagnetic running surface (6), or wherein
the drive device (10'; 110; 210; 310) comprises a ferromagnetic mass element (10'), which is designed to hold the laying unit (3; 103; 203; 303) on the running surface (6') and/or to drive said laying unit in a predetermined advancement upon interaction with the running surface (6') that provides a magnetic field, wherein the laying unit (3; 103; 203; 303) can be advanced on the running surface (6; 6') by magnetic interaction of the drive device (10; 110; 210; 310) with the running surface (6, 6').

2. Apparatus (1; 1'; 1"; 1‴) according to Claim 1, **characterized in that**
the laying unit (3; 103; 203; 303) is provided with a receiving portion, in particular for holding available a supply of fibre material, which receiving portion is formed with a housing (13; 113; 213).

3. Apparatus (1; 1'; 1"; 1‴) according to Claim 2, **characterized in that**
the drive device (10; 10'; 110; 210) is provided on or in the housing (13; 113; 213), wherein the housing (13; 113; 213) is designed to advance the laying unit (3; 103; 203) rollably on the running surface (6; 6').

4. Apparatus (1; 1'; 1"; 1‴) according to Claim 3, **characterized in that**
the drive device (10; 10'; 110; 210) comprises magnets (11) that can be moved relative to the housing (13; 113; 213), in particular on the periphery of the housing (13; 113; 213), and/or a ferromagnetic mass element (10').

5. Apparatus (1; 1'; 1"; 1‴) according to Claim 2,
**characterized in that**
the drive device (210) is in the form of a drive roller (219) coupled to the housing (213).

6. Apparatus (1; 1'; 1"; 1‴) according to one of the preceding claims,
**characterized in that**
the drive device (10; 10'; 110; 210; 310) is in the form of a laying device (222) for the defined laying and/or compacting of a fibre material (4; 104; 204; 304) on a tool.

7. Apparatus (1; 1'; 1"; 1‴) according to one of the preceding claims, **characterized in that**
the drive device (10; 10'; 110; 210; 310) is provided in the form of a heating device (225), in particular a heating device heated by means of eddy currents, for activating a resin or binder of the fibre material (4; 104; 204; 304).

8. Apparatus according to one of the preceding claims,
**characterized in that**
a hollow body (8; 8') is provided, the inner side of which is in the form of a running surface (6; 6') for the laying unit (3; 103; 203; 303), on which the laying unit (3; 103; 203; 303) can be advanced by way of a magnetic interaction with the running surface (6; 6'), wherein the shaping tool can be arranged within the hollow body (8; 8') in such a way that the laying unit (3; 103; 203; 303) advancing on the running surface (6; 6') winds or braids the fibre material (4; 104; 204; 304) around the tool (2'; 2").

9. Apparatus according to one of the preceding claims, **characterized in that**
the running surface (6') contains controllable magnets (12), which are designed to be actuatable to interact with the drive device (10'; 110; 210; 310) for the purpose of magnetically driven advancement of the laying unit (3; 103; 203; 303) on the running surface (6').

10. Apparatus according to Claim 9,
**characterized in that**
the running surface (6') comprises communication means, which are configured to transmit control commands from a control device, in particular a control device (5) incorporated in the laying unit, for the purpose of actuating the controllable magnets (12) for the advancement of the laying unit (3; 103; 203; 303).

11. Method for producing a fibre composite component, having the following method steps:
providing a shaping tool (2; 2'; 2"), wherein the shaping tool is in the form of a running surface (6; 6'), and a magnetically drivable laying unit (3; 103; 203; 303), which is provided to lay a fibre material (4; 104; 204; 304) on the tool (2; 2'; 2"), and
laying the fibre material (4; 104; 204; 304) on the shaping tool (2; 2'; 2") in a predetermined fibre arrangement by way of the magnetically driven advancement of the laying unit (3; 103; 203; 303) on the running surface (6; 6') that is ferromagnetic and/or provides a magnetic field.

## Revendications

1. Dispositif (1; 1' ; 1" ; 1‴) de fabrication d'un composant composite renforcé par des fibres, comportant un outil de façonnage (2 ; 2' ; 2"), l'outil de façonnage (2 ; 2' ; 2") étant réalisé sous forme de surface de roulement (6 ; 6'), et
une unité de dépôt (3 ; 103 ; 203 ; 303) comportant : un dispositif d'entraînement (10 ; 10' ; 110 ; 210 ; 310), lequel est réalisé pour la coopération magnétique avec la surface de roulement (6 ; 6') produisant un champ magnétique et/ou ferromagnétique pour l'avancement de l'unité de dépôt sur la surface de roulement (6 ; 6'), l'unité d'entraînement (10 ; 110 ; 210 ; 310) présentant des aimants (11) pouvant être commandés, lesquels sont réalisés pour retenir l'unité de dépôt (3 ; 103 ; 203 ; 303) sur la surface de roulement (6) lors de la coopération avec la surface de roulement (6) ferromagnétique et/ou pour l'entraîner de manière à obtenir un avancement prédéfini, ou
le dispositif d'entraînement (10' ; 110 ; 210 ; 310) présentant un élément de masse (10') ferromagnétique, lequel est réalisé pour retenir l'unité de dépôt (3 ; 103 ; 203 ; 303) sur la surface de roulement (6') lors de la coopération avec la surface de roulement (6') produisant un champ magnétique et/ou pour l'entraîner de manière à obtenir un avancement prédéfini ;
l'unité de dépôt (3 ; 103 ; 203 ; 303) pouvant être avancée sur la surface de roulement (6 ; 6') par coopération magnétique du dispositif d'entraînement (10 ; 110 ; 210 ; 310) avec la surface de roulement (6 ; 6').

2. Dispositif (1 ; 1' ; 1" ; 1‴) selon la revendication 1,
**caractérisé en ce**
**qu'**une partie de réception, en particulier pour tenir à disposition une réserve de matériau fibreux, est prévue près de l'unité de dépôt (3 ; 103 ; 203 ; 303), laquelle partie de réception est pourvue d'un boîtier (13 ; 113 ; 213) .

3. Dispositif (1 ; 1' ; 1" ; 1‴) selon la revendication 2,
**caractérisé en ce que**
le dispositif d'entraînement (10 ; 10' ; 110 ; 210) est prévu sur ou dans le boîtier (13 ; 113 ; 213), le boîtier (13 ; 113 ; 213) étant réalisé de manière à pouvoir rouler sur la surface de roulement (6 ; 6') pour l'avancement de l'unité de dépôt (3 ; 103 ; 203).

4. Dispositif (1 ; 1' ; 1'' ; 1‴) selon la revendication 3 ,
**caractérisé en ce que**
le dispositif d'entraînement (10 ; 10' ; 110 ; 210) présente des aimants (11) et/ou un élément de masse (10') mobiles par rapport au boîtier (13 ; 113 ; 213), en particulier sur la périphérie du boîtier (13 ; 113 ; 213) .

5. Dispositif (1 ; 1' ; 1" ; 1‴) selon la revendication 2,
**caractérisé en ce que**
le dispositif d'entraînement (210) est réalisé sous forme de rouleau d'entraînement (219) accouplé au boîtier (213) .

6. Dispositif (1; 1' ; 1" ; 1‴) selon l'une des revendications précédentes,
**caractérisé en ce que**
le dispositif d'entraînement (10 ; 10' ; 110 ; 210 ; 310) est réalisé sous forme de dispositif de dépôt (222) pour le dépôt défini et/ou la compression d'un matériau fibreux (4 ; 104 ; 204 ; 304) sur un outil.

7. Dispositif (1; 1' ; 1" ; 1‴) selon l'une des revendications précédentes,
**caractérisé en ce que**
le dispositif d'entraînement (10 ; 10' ; 110 ; 210 ; 310) est prévu en tant que dispositif de chauffage (225), en particulier en tant que dispositif de chauffage chauffé à l'aide de courants de Foucault, pour l'activation d'une résine ou d'un liant du matériau fibreux (4 ; 104 ; 204 ; 304).

8. Dispositif selon l'une des revendications précédentes,
**caractérisé en ce**
**qu'**un corps creux (8 ; 8') est prévu, dont le côté intérieur est réalisé sous la forme d'une surface de roulement (6 ; 6') pour l'unité de dépôt (3 ; 103 ; 203 ; 303), surface de roulement sur laquelle l'unité de dépôt (3 ; 103 ; 203 ; 303) peut être avancée par coopération magnétique avec la surface de roulement (6 ; 6'), l'outil de façonnage pouvant être disposé à l'intérieur du corps creux (8 ; 8') de telle sorte que l'unité de dépôt (3 ; 103 ; 203 ; 303) avançant sur la surface de roulement (6 ; 6') enroule ou entrelace le matériau fibreux (4 ; 104 ; 204 ; 304) sur l'outil (2' ; 2").

9. Dispositif selon l'une des revendications précédentes,
**caractérisé en ce que**
la surface de roulement (6') contient des aimants (12) pouvant être commandés, lesquels sont réalisés de manière à pouvoir être commandés pour coopérer avec l'unité d'entraînement (10' ; 110 ; 210 ; 310) pour l'avancement entraîné magnétiquement de l'unité de dépôt (3 ; 103 ; 203 ; 303) sur la surface de roulement (6').

10. Dispositif selon la revendication 9,
**caractérisé en ce que**
la surface de roulement (6') présente des moyens de communication, lesquels sont conçus pour transmettre des ordres de commande d'un dispositif de commande, en particulier d'un dispositif de commande (5) intégré dans l'unité de dépôt, pour la commande des aimants (12) pouvant être commandés pour l'avancement de l'unité de dépôt (3 ; 103 ; 203 ; 303).

11. Procédé de fabrication d'un composant composite renforcé par des fibres, comportant les étapes de procédé suivantes : fourniture d'un outil de façonnage (2 ;2' :2"), l'outil de façonnage étant réalisé sous forme de surface de roulement (6 ; 6'), et d'une unité de dépôt (3 ; 103 ; 203 ; 303) pouvant être entraînée magnétiquement, laquelle est prévue pour le dépôt d'un matériau fibreux (4 ; 104 ; 204 ; 304) sur l'outil (2 ; 2' ; 2"), et dépôt du matériau fibreux (4 ; 104 ; 204 ; 304) sur l'outil de façonnage (2 ; 2' ; 2") suivant un agencement de fibres prédéfini par avancement entraîné magnétiquement de l'unité de dépôt (3 ; 103 ; 203 ; 303) sur la surface de roulement (6 ; 6') produisant un champ magnétique et/ou ferromagnétique.
